# EUROPEAN PATENT APPLICATION

(11) **EP 0 554 088 A2**
(43) Date of publication of application: **04.08.1993**
(21) Application number: 93300624.9
(22) Date of filing: 28.01.1993
(51) Int. Cl.: G11B 15/665

(54) **Magnetic recording/playback apparatus**

(30) Priority: 31.01.1992 JP 42053/92
(71) Applicant: VICTOR COMPANY OF JAPAN, LTD., Yokohama-Shi, Kanagawa-Ken (JP)
(72) Inventor: Wakui, Yoshiaki, Kanazawa-ku, Yokohama-shi, Kanagawa-ken (JP)
(74) Representative: Gladwin, Philip

(57) **Abstract**

A recording/playback apparatus having a rotary head drum for recording/playback signals on a magnetic tape housed in a tape cassette having an opening at bottom front thereof for accepting tape loading members of the apparatus, in which the threaded tape is positioned precisely thus runs quite stably for improved performance.

The apparatus comprises 3 tape loading poles as the loading members which are respectively supported on 3 movable bases movable back and forth along guide rails extending from a vicinity of the opening of the loaded tape cassette to a vicinity of the rotary head drum, the 3 poles draw a magnetic tape out of the tape cassette and thread it along a tape path extending from a supply reel to a take-up reel of the loaded tape cassette including the head drum as the 3 poles have finally been stopped and accurately positioned. The apparatus further comprises a pair of stationary slant poles located respectively at supply and take-up sides of the rotary head drum for directing the magnetic tape toward the head drum and the take-up reel respectively. The slant poles are isolated from the head drum in the tape path by the intervening 3 poles for stable tape running.

## Description

### BACKGROUND OF THE INVENTION

### Field of the Invention:

The present invention relates to loading of a magnetic tape into a magnetic recording/playback apparatus for wrapping the tape helically around a rotary drum in a certain angular range to record or play back signals on or from the magnetic tape.

### Description of the Related Art:

Both stationary and portable type magnetic recording/playback apparatuses for videotape recorders (VTR), digital audio tape-recorders (R-DAT) and the like are being remarkably downsized lately. Along that, tape cassettes used for such magnetic recording/playback apparatuses are also being downsized and signals are recorded/played back on/from magnetic tapes in high density.

It is well known that generally in the aforementioned magnetic recording/playback apparatus, signals are recorded/played back by drawing a magnetic tape out of a tape cassette, wrapping it helically around a rotary drum having a magnetic head in a certain angular range and helically scanning the tape by the rotating magnetic head.

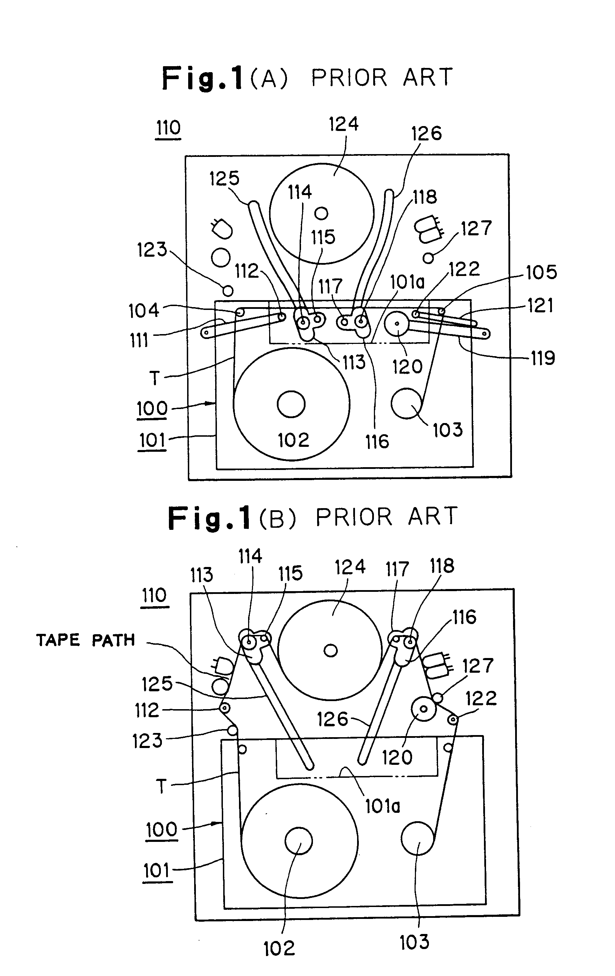

Figs. 1 (A) and 1 (B) illustrate a construction of a prior art magnetic recording/playback apparatus, wherein Fig. 1(A) shows a state before the tape is loaded to the drum section (hereinafter referred to as "tape loading") and Fig. 1 (B) shows a state after completing the tape loading action.

In the prior art magnetic recording/playback apparatus 110 (hereinafter referred to as the apparatus 110) shown in Fig. 1 (A), the magnetic tape T is threaded across a supply reel 102 and a take-up reel 103 provided on the left and right of the inside of a cassette case 101 and the magnetic tape T rolled out of the supply reel 102 is threaded across supply side and take-up side tape guides 104 and 105 provided at the front of the cassette case 101 and is wound around the take-up reel 103 in the state before the tape is loaded in the tape cassette 100 mounted in the apparatus 110.

The tape cassette 100 is further provided with an opening 101a which opens at a bottom thereof between the supply side tape guide 104 and the take-up side tape guide 105 at the front thereof and a plurality of tape loading members provided in the apparatus 110 for pulling the magnetic tape T out to a predetermined tape path external to the tape cassette 100 during tape loading action are housed at the stand-by position shown in the figure within the opening 101a.

Here, as a plurality of tape loading members for example of VHS type apparatus 110 for which "M" loading is adopted, a tension roller 112 supported by a tension arm 111, a tape guide roller 114 and slant pole 115 supported on a loading base 113 enter the opening 101a on the supply side, on the other hand, a slant pole 117 and tape guide roller 118 supported on a loading base 116, a pinch roller 120 supported by a pinch roller arm 119 and a take-up roller 122 supported by a take-up roller arm 121 enter the opening 101a on the take-up side.

Further, a tape guide 123 is provided near the outside on the supply side front of the tape cassette 100. Guide grooves 125 and 126 for guiding the loading bases 113 and 116 in the direction of the rotary drum 124 from the opening 101a are provided on the left and right sides centering on the rotary drum 124 rotatably provided in the inner part of the apparatus 110. A capstan 127 for running a magnetic tape T while interposing it with a pinch roller 120 is provided on the right side of the rotary drum 124.

During tape loading action, the tape loading members housed within the opening 101a of the tape cassette 100 are moved, the magnetic tape T is threaded to the predetermined tape path while being wrapped helically around the rotary drum 124 and the magnetic tape T is run while being interposed between the pinch roller 120 and the capstan 127 as shown in Fig. 1 (B) to carry out recording/playback by a magnetic head (not shown) which rotates in one body with the rotary drum 124.

By the way, in the prior art magnetic recording/playback apparatus 110 described above, although the magnetic tape T may be wrapped helically around the rotary drum 124 in a certain angular range by threading it across the tape guide roller 114 and slant pole 115 supported on the loading base 113 which moves along the left guiding groove 125 and the slant pole 117 and tape guide roller 118 supported on the loading base 116 which moves along the right guide groove 126, great care is necessary in order to correctly maintain the slant pole 115 and 117 during assembly since the supply side slant pole 115 and the take-up side slant pole 117 are supported respectively by the moving loading bases 113 and 116.

Further, since the supply side slant pole 115 and the take-up side slant pole 117 are positioned respectively on the tape lead-in and lead-out sides of the rotary drum 124, errors in the precision of positions of both slant poles 115 and 117 may affect running of the magnetic tape T which is wrapped around the rotary drum 124, causing ill effects on the abutment between the magnetic head (not shown) and the magnetic tape T and on the track linearity.

### SUMMARY OF THE INVENTION

Accordingly, it is a general object of the present invention to provide an improved magnetic recording /playback apparatus, in which aforementioned problems of tape guiding members positioning accuracy have been overcome.

Another and specific object of the present invention is to provide a magnetic recording/playback apparatus having a rotary head drum mounted on a chassis base for recording/ playback signals on and from a magnetic tape housed in a tape cassette to be loaded into the apparatus, the magnetic tape being wound on a supply reel and a take-up reel housed within the tape cassette being threaded along a front of the tape cassette which is provided with an opening along the front thereof and between the supply and take-up reels for accepting tape loading members of the apparatus. The loading members includes movable loading bases and moves out of the tape cassette from the opening for drawing the magnetic tape out of the tape cassette and threading the magnetic tape along a tape path extending from the supply reel to the take-up reel including a helical lead of the rotary head drum. The recording/playback apparatus further comprises a first slant pole mounted on the chassis base at a supply side of the rotary head drum, the first slant pole has a first predetermined height and a first predetermined angle in a first predetermined direction with respect to the rotary head drum fordirecting the magnetic tape toward the rotary head drum along the tape path, and some of the loading members i.e. some guide poles are supported on the movable loading bases at a downstream of the first slant pole in the tape path, the movable loading bases moves along guide rails extending from a vicinity of the opening of the loaded tape cassette to a vicinity of the rotary head drum, so that the guide poles draw the magnetic tape out of the tape cassette and thread it along the tape path including the helical lead of the rotary head drum. There provided also includes a second slant pole mounted on the chassis base at a take-up side of the rotary head drum and in a downstream of the loading members which moved close to the rotary head drum, the second slant pole has a second predetermined height and a second predetermined angle in a second predetermined direction with respect to the rotary head drum for directing the magnetic tape along the tape path toward the take-up reel.

Still another and specific object of the present invention is to provide a magnetic recording/playback apparatus which comprises first through third movable loading bases moving respectively along first through third guide rails provided on the chassis base, the first guide rail extends to a tape lead-in side of the rotary head drum, the second guide rail extends to a tape lead-out side of the rotary head drum. The apparatus further comprises a first guide member mounted on the chassis base between the first slant pole and the helical lead of the rotary head drum for restricting running of the magnetic tape in the tape path, and comprises a second through fourth guide members respectively mounted on the first through third movable loading bases, which second, third and fourth guide members draw the magnetic tape out of the tape cassette, and the second and third guide members thread the magnetic tape along the helical lead of the rotary head drum.

Still another and specific object of the present invention is to provide a magnetic recording/playback apparatus wherein the chassis base comprises a base member and all of the first slant pole, the first guide member and the second slant pole are mounted on the base member as a unitized component and disposed in a vicinity of the rotary heads drum, and the base member stops and positions accurately the second through fourth guide members for relative positions therebetween when the first through third movable loading bases move along the first through third guide rails respectively and reach respective ends of travel.

Still another and specific object of the present invention is to provide a magnetic recording/playback apparatus wherein the third guide member moves ahead of the second guide member, and the fourth guide member is stopped and positioned after the third and second guide members are stopped and positioned.

Other objects and further features of the present invention will be apparent from the following detailed description with respect to preferred embodiments of the invention when read in conjunction with the accompanying drawings.

### BRIEF DESCRIPTION OF THE DRAWINGS

Figs. 1(A) and 1(B) are structural drawings illustrating a prior art magnetic recording/playback apparatus, wherein Fig. 1 (A) shows a state before a tape is loaded and Fig. 1(B) shows a state when the tape is loaded after completing the tape loading action.
Fig. 2 is a perspective view illustrating a tape cassette used for the magnetic recording/playback apparatus of the present invention.
Fig. 3 is a perspective view mainly illustrating tape loading members of the magnetic recording/playback apparatus of the present invention.
Fig. 4 is a plan view showing a state before loading the cassette and tape after mounting the tape cassette to the magnetic recording/playback apparatus of the present invention.
Fig. 5 is a plan view showing a state when the cassette and tape are loaded after mounting the tape cassette to the magnetic recording/playback apparatus of the present invention and after completing the cassette and tape loading actions.
Fig. 6 is a perspective view for explaining a cassette and tape loading drive mechanism section for concurrently carrying out both cassette loading and tape loading actions, wherein an initial state is shown by removing a slide deck and guide rail plate shown in Figs. 3 and 4.
Fig. 7 is a plan view illustrating the state shown in Fig. 6 in plane.
Fig. 8 is a plan view for explaining the cassette and tape loading drive mechanism section for concurrently carrying out cassette loading and tape loading actions, wherein a state in which the loading has been completed is shown by removing the slide deck and guide rail plate shown in Figs. 3 and 4.
Fig. 9 is a plan view illustrating a slant base assembly section and capstan seen by removing the rotary drum in the state when the tape loading action has been completed as shown in Fig. 8.
Fig. 10 is a section view illustrating a capstan assembly.
Fig. 11 (A) through 11 (E) are drawings for explaining track angle of the magnetic tape and lead angle of the rotary drum.
Fig. 12 is a drawing for explaining a step of the cassette loading and tape loading.
Fig. 13 is a drawing for explaining a step of the cassette loading and tape loading.
Fig. 14 is a drawing for explaining a step of the cassette loading and tape loading.
Fig. 15 is a drawing for explaining a step of the cassette loading and tape loading.
Fig. 16 is a drawing for explaining a step of the cassette loading and tape loading.
Fig. 17 is a drawing for explaining a step of the cassette loading and tape loading.

### DETAILED DESCRIPTION OF PREFERRED EMBODIMENT

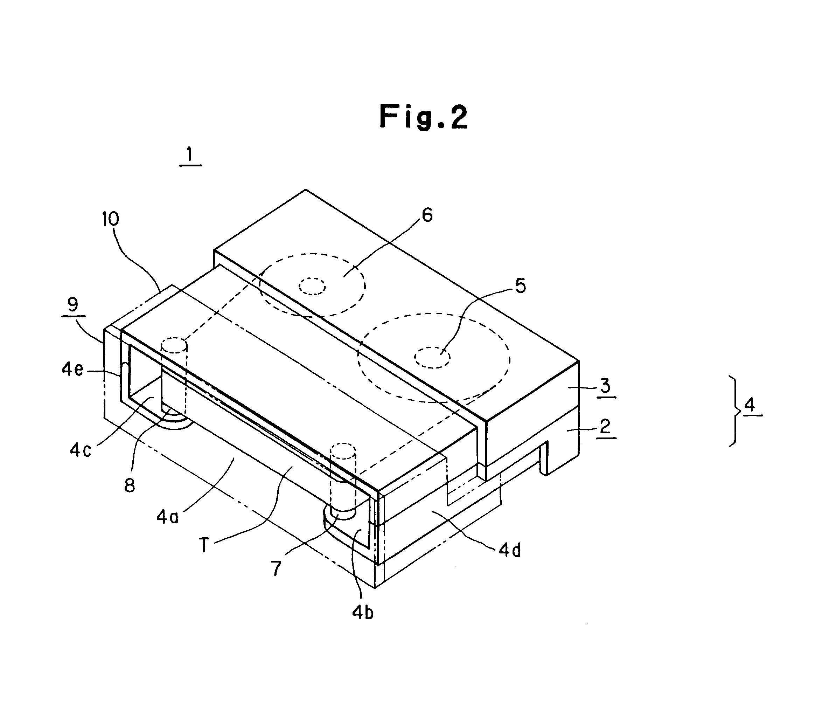

Referring now to Figs. 2 through 17, one preferred embodiment of the magnetic recording/playback apparatus of the present invention will be explained in detail about "Tape Cassette", "Construction of the Magnetic Recording/ Playback Apparatus" and "operation of the Magnetic Record ing/Playback Apparatus" in order.

### [Tape Cassette]

Fig. 2 is a perspective view illustrating a tape cassette used for the magnetic recording/playback apparatus of the present invention.

Before explaining the magnetic recording/playback apparatus of the present invention, the tape cassette used for the apparatus will be briefly explained referring to Fig. 2.

A tape cassette 1 shown in Fig. 2 is comprised of two divided parts using resin members of a lower half member 2 and an upper half member 3 forming its exterior, i.e., a rectangular parallelepiped cassette case 4 is formed by a combination of both of the half members 2 and 3. A magnetic tape T is housed in the cassette case 4 by being threaded between a supply reel 5 and take-up reel 6. The magnetic tape T from the supply reel 5 is threaded through supply and take-up side tape guides 7 and 8 provided on the front side of the cassette case 4 and is wound to the take-up reel 6. By the way, the supply reel 5 and take-up reel 6 are positioned in the same height in the cassette case 4 and the magnetic tape T wound around the both reels 5 and 6 is also naturally kept in the same height.

A first opening 4a is provided on the front side of the cassette case 4 by largely carving out the lower half member 2 between the supply side tape guide 7 and the take-up side tape guide 8. The first opening 4a is designed to house a part of a rotary drum and to accept tape loading members of a magnetic recording/playback apparatus 20 described later.

A second opening 4b is provided at a front of the cassette case 4 and between a side wall 4d and the tape guide 7 on the supply side for leading out the magnetic tape T from the supply reel 5 to the outside of the cassette during tape loading action and similarly, a third opening 4c is provided at a front of the cassette case 4 and between a side wall 4e and the tape guide 8 on the take-up side for leading in the magnetic tape T from the outside of the cassette to the take-up reel 6 during the tape loading action.

Furthermore,a front lid 9 and slider 10 are provided so that they cover the first, second and third openings 4a-4c and the magnetic tape T. The front lid 9 and the slider 10 are opened in cooperation with an operation of mounting the tape cassette 1 to the apparatus 20, but their detailed description is omitted here.

### [Construction of the Magnetic Recording/Playback Apparatus]

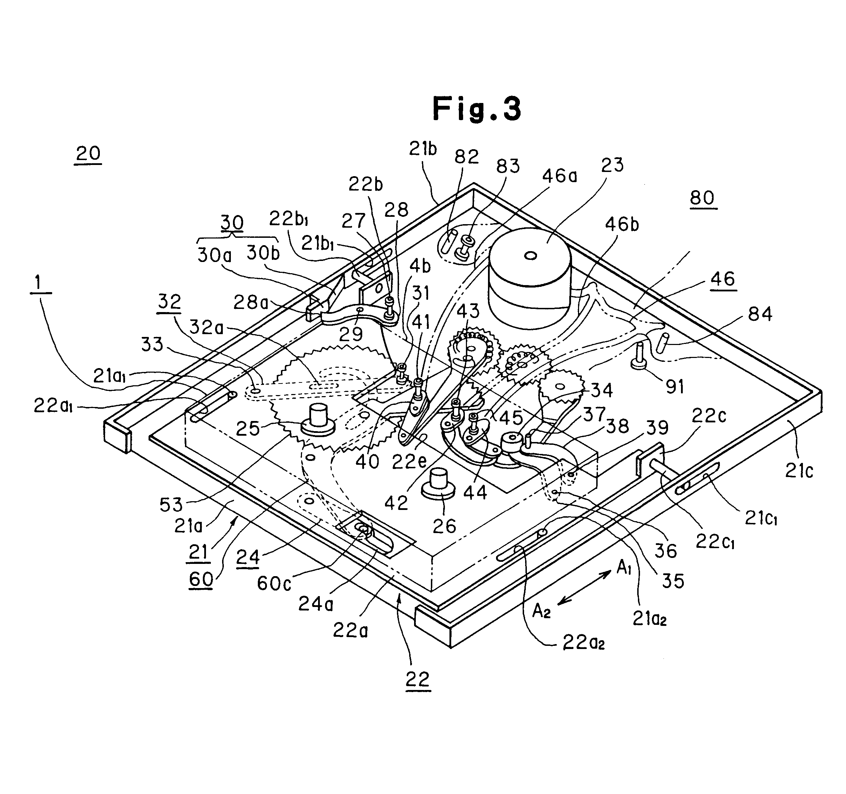

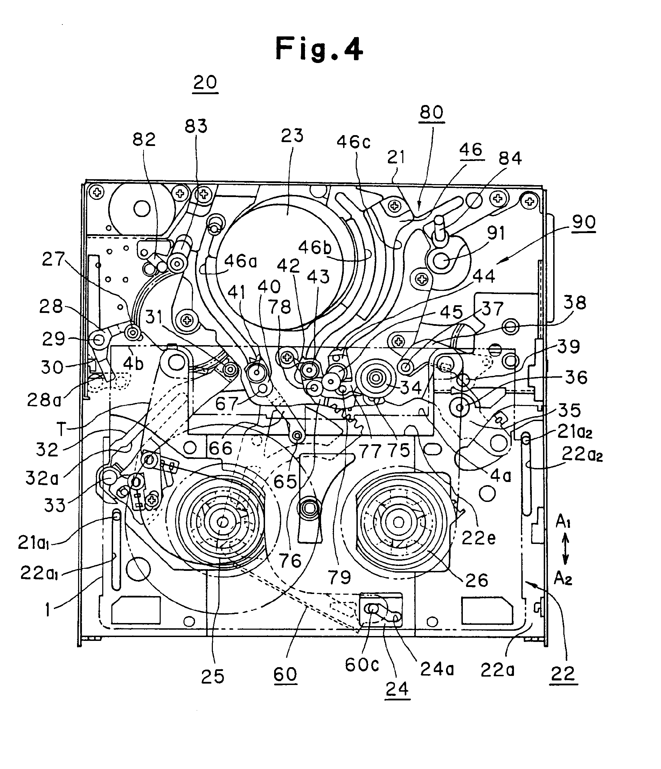

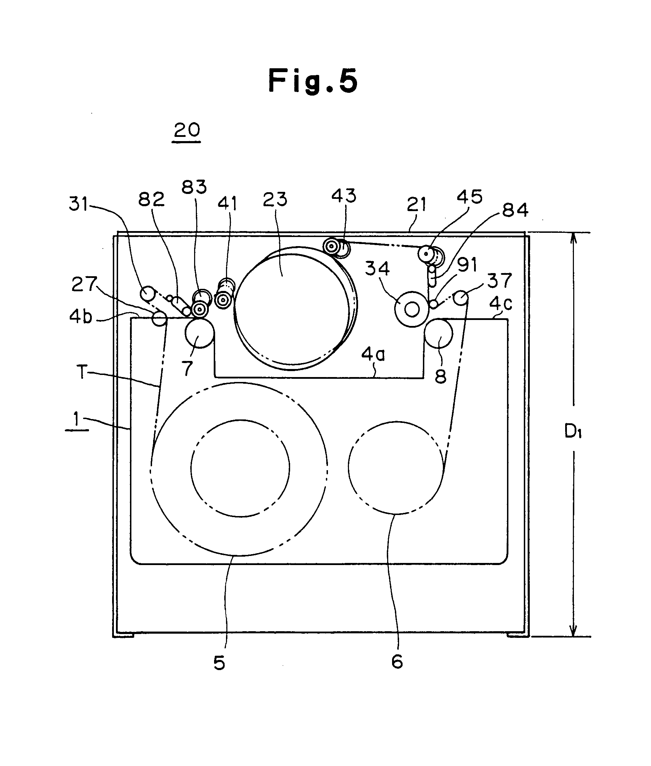

Fig. 3 is a perspective view mainly illustrating the tape loading members of the magnetic recording/playback apparatus of the present invention. Further Fig. 4 is a plan view showing a state before mounting the tape cassette to the magnetic recording/playback apparatus of the present invention. Fig. 5 is a plan view showing a state when the cassette and tape have been loaded after mounting the tape cassette to the magnetic recording/playback apparatus of the present invention.

The magnetic recording/playback apparatus 20 (hereinafter referred to as also the apparatus 20) of the present invention features in that it is constructed so that the cassette loading action in which the tape cassette 1 is mounted on a slide deck 22 movably provided on the front side of a chassis base 21 of the apparatus 20 and the tape cassette 1 is moved together with the slide deck 22 so that it is engaged with the rotary drum 23 provided in the inner part of the chassis base 21 in the state when the cassette loading and tape loading actions are finished as shown in Fig. 5 and the tape loading action in which the magnetic Fig. 5 and the tape loading action in which the magnetic tape T is pulled out of the tape cassette 1 by the tape loading members to wrap helically around the rotary drum 23 in a certain angular range are concurrently carried out by single arm gear 60 (Fig. 3) which cooperates with a control cam gear 53 connected with a driving source.

Now the construction of the magnetic recording/playback apparatus of the present invention will be explained with reference to Figs. 3 and 4.

Firstly, the chassis base 21 which is the base of the magnetic recording/playback apparatus 20 is formed into a frame whose periphery is folded using a sheet metal such as an aluminum sheet.

The slide deck 22 for mounting the tape cassette 1 is formed on the front side of the apparatus 20 on the chassis base 21 using a sheet metal such as an aluminum sheet by being bent on the both right and left sides thereof in a manner capable of moving in the directions of arrows A1 and A2. That is, shafts 21aᵢ and 21a₂ secured to the upper surface 21a of the chassis base 21 slidably engage with elongated holes 22aᵢ and 22a₂ at the ends of the right and left sides perforated on an upper surface 22a of the slide deck 22 and guide rods 22bᵢ and 22cᵢ secured to the right and left sides 22b and 22c of the slide deck 22 slidably engage with elongated holes 21 b₁ and 22cᵢ perforated on the right and left sides 21 b and 21c of the chassis base 21. Further, a pin 60c secured to the other end of the arm gear 60 which moves the slide deck 22 toward the rotary drum "Z" shape groove 24a of a lever 24 provided on the back side of the front of the slide deck 22.

A supply reel disc 25 and take-up reel disc 26 which rotate and drive the supply reel 5 and the take-up reel 6 (Fig. 2) of the tape cassette 1 while engaging with them are mounted on the slide deck 22.

Further on the slide deck 22, a part of the tape loading members for pulling the magnetic tape T out of the tape cassette 1 is supported. That is, an entrance lever 28 whose one end rotatable supports a tape guide member 27 (hereinafter referred to as the entrance roller 27) for regulating running of the magnetic tape T is urged clockwise by a spring (not shown) centering on a shaft 29 secured to the slide deck 22 on the outside of the tape cassette 1 mounted on the slide deck 22 and nearthe second opening 4b. A protrusion 28a provided on the other end of the entrance lever 28 abuts on an elevated face 30a of a trapezoidal bracket 30 formed extruding toward inside of the left side face 21 b of the chassis base 21 before starting the tape loading action, thereby the entrance roller 27 is positioned on the outside of the second opening 4b before starting the tape loading action. Although the entrance roller 27 is positioned on the outside of the tape cassette 1 before starting tape loading, the entrance lever 28 turns clockwise centering on the shaft 29 during the cassette loading action as will be described later since the protrusion 28a of the entrance lever 28 moves from the elevated face 30a of the trapezoidal bracket 30 along a slant face 30b which is connected to the elevated face 30a due to the move of the slide deck 22 towards the rotary drum direction. That is, the entrance roller 27 enters (bites) the inside of the supply side second opening 4b of the tape cassette 1 cooperating with the move of the slide deck 22 twards the rotary drum as shown in Fig. 5. At this time, height of the entrance roller 27 is designed so that it is accommodated within the space between the lower half member 2 and the upper half member 3 of the tape cassette 1 shown in Fig. 2.

By providing the magnetic tape running system in which the entrance roller27 for guiding running of the magnetic tape T is adapted to enter the second opening 4b of the tape cassette 1 during the tape loading action as described above, an effective magnetic tape running system can be realized in which the running space of the magnetic tape T can be effectively utilized. Further, since not only running load of the magnetic tape T is reduced to enter the inner part of the first opening 4a of the tape cassette 1 and since the depth D₁ of the apparatus 20 can be reduced as shown in Fig. 5, the apparatus 20 can be downsized further.

By the way, it is also possible to put a member equivalent to the entrance roller 27 into the take-up side third opening 4c of the tape cassette 1 by constructing in the same manner as above and it can be entered to either one or both openings of the second and third openings 4b and 4c. Furthermore, although the present embodiment has been described as the entrance roller 27 being supported by the slide deck 22, the present invention is not limited by the specific embodiment. That is, it is possible to support the entrance roller 27 on the chassis base 21 and to let the entrance roller 27 enter either one or both of the openings of the second and third openings 4b and 4c in cooperation with tape cassette loading or tape loading.

An opening 22e is provided on the slide deck 22 at the section facing to the first opening 4a of the tape cassette 1 (Figs. 2 and 4). Then before starting the tape loading action, a tension arm 32 which supports a tension roller 31 is urged clockwise by a spring (not shown) centering on a shaft 33 secured to the slide deck 22 on the left side of the opening 22e.

On the other hand, a pinch roller arm 35 is rotatably supported centering on a shaft 36 secured to the slide deck 22 and a take-up lever 38 which supports a take-up roller 37 is rotatably supported centering on a shaft 39 secured to the slide deck 22.

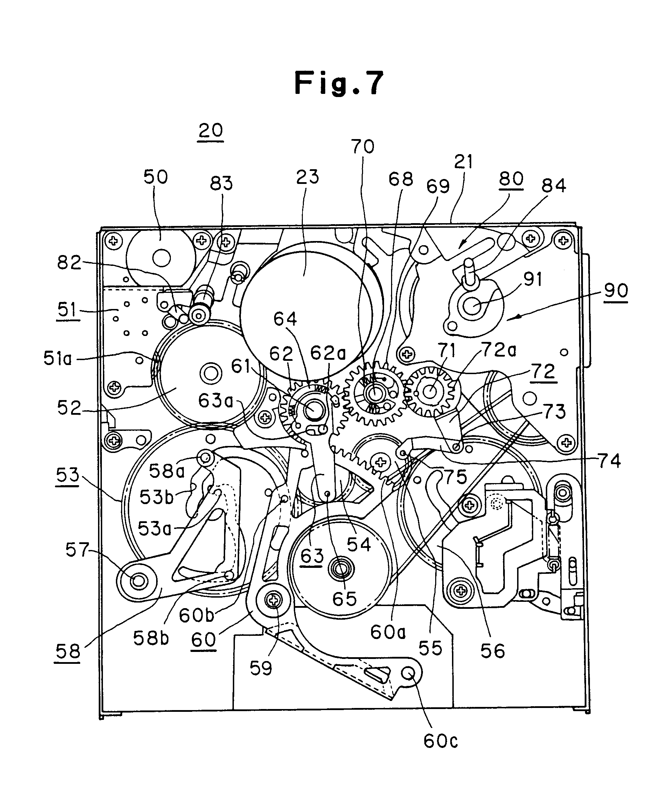

The tension roller 31, pinch roller 34, take-up roller 37 positioned within the opening 22e are facing to the first opening 4a of the tape cassette 1. Then the tension arm 32 is activated by a control cam gear 53 (Fig, 3) described later in a predetermined timing, the pinch roller arm 35 is activated by a pinch roller cam gear 56 (fig. 7) described later in a predetermined timing and the take-up gear 38 is activated by the move of the slide deck 22 in the rotary drum direction.

Furthermore, a first tape guide member41 (hereinafter referred to as the supply side upper regulating guide roller 41 or the guide roller 41) vertically supported on a first loading base 40, a second tape guide member 43 (hereinafter referred to as the take-up side upper regulating guide roller43 or the guide roller 43) vertically supported on a second loading base 42 and a third tape guide member 45 (hereinafter referred to as the take-up side lower regulating guide roller 45 or the guide roller45) supported on a third loading base 44 with a predetermined inclination are mounted slidably along first through third guide rails 46a through 46c on a guide rail plate 46 fixed to the upper surface 21 a of the chassis base 21 respectively. The first to third guide rails 46a through 46c are formed in one body on the guide rail plate 46 using a resin member and the like. The guide rollers 41, 43 and 45 supported on those first to third loading bases 40, 42 and 44 face approximately to the center part of the opening 22e provided on the slide deck 22 and to the first opening 4a of the tape cassette 1 before starting the tape loading action.

The first guide rail 46a for guiding the first loading base 40 is provided in the tape lead-in side of centering on the rotary drum 23. It is provided along the upper surface 21a of the chassis base 21 in parallel thereto for some length from the opening 22e and then as it approaches to the tape lead-in side of the rotary drum 23 where the magnetic tape T enters, it gradually slants tward up leaving the chassis base 21 and ends up forming a high slant face at the end thereof.

The second guide rail 46b for guiding the second loading base 42 is provided in the tape lead-out side of the rotary drum 23. It is provided along the upper surface 21a of the chassis base 21 in parallel thereto for some length from the opening 22e and then as it approaches to the lead-out side of the rotary drum 23 where the magnetic tape T is pulled out, it gradually slants toward down to the chassis 21 and ends up forming a descending slant plane which is lower than the elevated slant plane at the end of the first guide rail 46a.

The third guide rail 46c for guiding the third loading base 44 is provided on the downstream of the second guide rail 46b by being separated from the lead-out side of the rotary drum 23 along the right side of the second guide rail 46b from the opening 22e. It is provided on a plane parallel to the upper surface 21a of the chassis base 21.

By the way, although the supply side upper regulating guide roller 41, take-up side upper regulating guide roller 43 and take-up side lower regulating guide roller45 described above are supported on the first to third loading bases 40, 42 and 44 in a manner adjustable their height by a mounting screw mechanism (not shown) and are provided with upper and lower flanges for regulating upper and lower edges of the magnetic tape T, the supply side upper regulating guide roller 41 and take-up upper regulating guide roller 43 specifically regulate the upper edge of the magnetic tape T and the take-up side lower regulating guide roller 45 regulates the lower edge of the magnetic tape T.

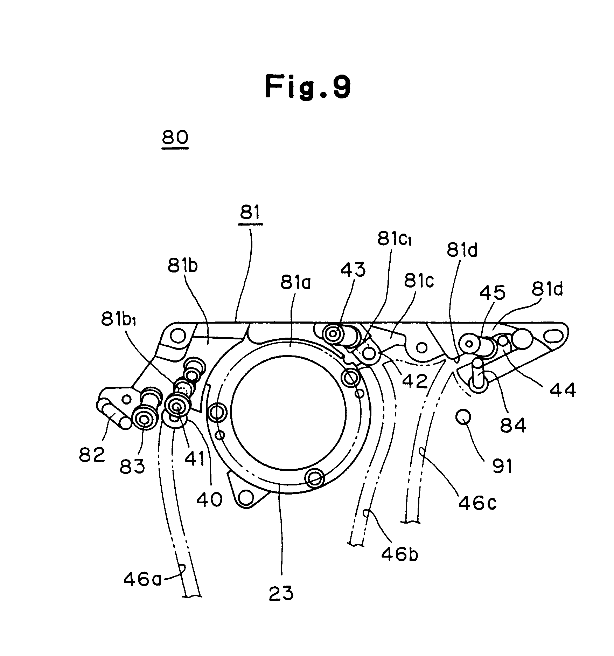

The end portions of the first through third guide rails 46a through 46c are opened to communicate with first through third guide rails 81a through 81c (Fig. 9) provided on a slant base 81 (Fig. 9) described later.

The tension roller 31, supply side upper regulating guide roller 41, take-up side upper regulating guide roller 43, take-up side lower regulating guide roller 45 and the take-up roller 37 are at standby position laid from the left to right within the opening 22e of the slide deck 22 and play the main function of the tape loading members of pulling the magnetic tape T out of the tape cassette 1 by entering into the first opening 4a (Fig. 2) of the tape cassette 1.

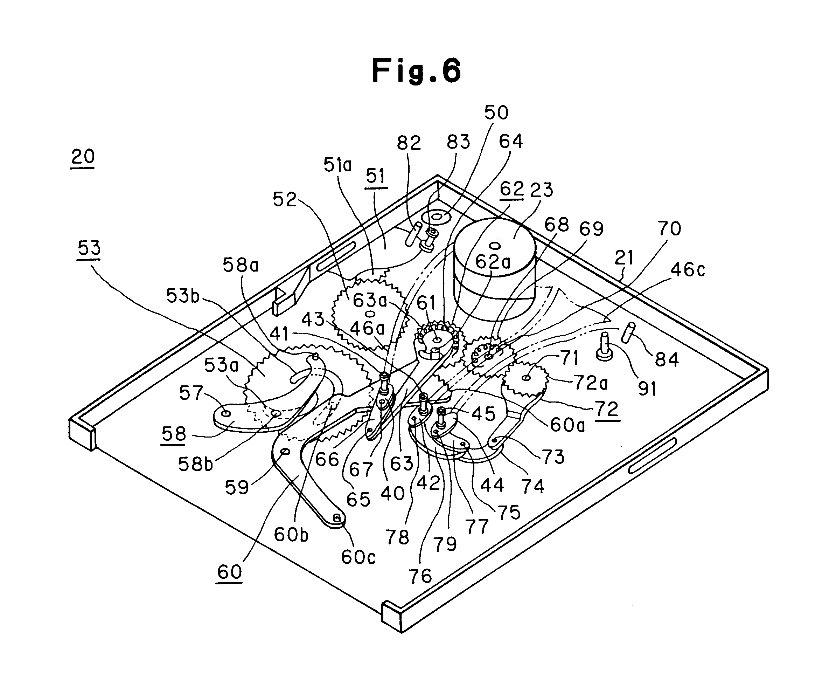

Next, the cassette and tape loading drive mechanism section for concurrently carrying out both actions of cassette loading action for moving the tape cassette 1 mounted on the slide deck 22 so that it partially mouths the rotary drum 23 and of tape loading action for pulling the magnetic tape T out of the tape cassette 1 by the tape loading members described above, will be explained with reference to Figs. 3, 4, 6, 7 and 8, particularly to Figs. 6 and 7.

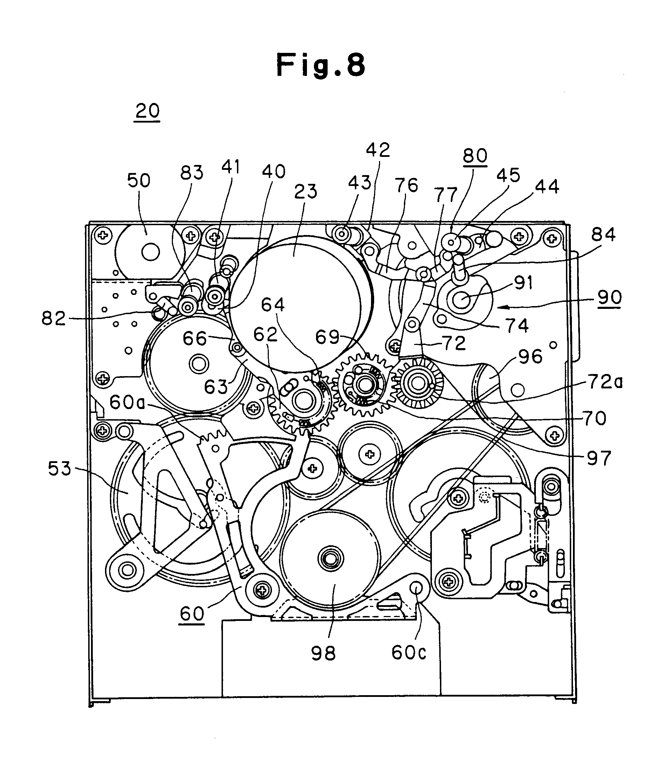

Fig. 6 is a perspective view for explaining the cassette and tape loading drive mechanism section for concurrently carrying out both cassette loading and tape loading actions, wherein an initial state is shown by removing the slide deck and guide rail plate shown in Figs. 3 and 4. Fig. 7 is a plan view illustrating the state shown in Fig. 6 in plane. Fig. 8 is a plan view for explaining the cassette and tape loading drive mechanism section for concurrently carrying out cassette loading and tape loading actions, wherein a state in which the loading has been completed is shown by removing the slide deck and guide rail plate shown in Figs. 3 and 4.

A loading motor 50 which is a driving source for moving the tape loading members and slide deck is provided on the chassis base 21 on the upper left side and rotation of the loading motor 50 is decelerated by a gear train (not shown) provided in a gear box 51 and its output is transmitted on the outside of the gear box by an output gear 51 a. Rotation of t he output gear 51 a is transmitted to an encorder gear 52 and a control cam gear 53 and further to a pinch roller cam gear 56 via a first and second transmission gears 54 and 55 as shown in Fig. 7.

A cam groove 53a for lever (hereinafter referred to as the cam groove 53a) and a cam groove 53b for arm (hereinafter referred to as the cam groove 53b) are provided on the control cam gear 53. A pin 58b secured to a lever 58 described below is engaged to the cam groove 53a and a pin 60b secured to an arm gear described below is engaged to the cam groove 53b.

A ">" shaped lever 58 is rotatably supported by a shaft 57 secured to the chassis base 21 on the front left side thereof and a "<" shaped arm gear 60 is turnably supported by a shaft 59 on the right side thereof.

The pin 58a is secured to one end of the lever 58. The pin 58a engages with an elongated slot hole 32a of the tension arm 32 (Figs. 3 and 4) and the pin 58b which engages with the cam groove 53a of the control cam gear 53 is secured between the pin 58a and the shaft 57.

A sector gear portion 60a is formed on one end of the arm gear 60 and the pin 60b which engages with the cam groove 53b of the control cam gear 53 is secured between the shaft 59 and the sector gear portion 60a. Further on the other end of the arm gear 60, a pin 60c which engages with the z groove 24a of the lever 24 provided on the lower half member 24 (Figs. 3 and 4) is secured.

Accordingly, when the control cam gear 53 is turned clockwise, the pin 58b of the lever 58 which slides the cam groove 53a turns the lever 58 counterclockwise centering on the shaft 57 and the pin 58a turns the tension arm 32 which is engaged with the pin 58a counterwise, thereby the tension roller 31 supported by the tension arm 32 is pulled out of the tape cassette 1 in a predetermined timing. Further, the pin 60b of the arm gear 60 which slides the cam groove 53b turns the arm gear 60 counterclockwise centering on the shaft 59 and the pin 60c moves the slide deck 22 in the direction of the rotary drum 23 with a predetermined timing through the intermediary of the lever 24 which is engaged with the pin 60c.

Furthermore, the sector gear portion 60a formed on one end of the arm gear 60 engages with a supply loading gear 62 which turns around a shaft 61. The supply loading gear 62 engages with an intermediate gear 69 which turns centering on a shaft 68 and the intermediate gear 69 engages with a take-up loading arm 72 formed in one body with a gear portion 72a which turns centering on a shaft 71. The tape loading gear train of the supply loading gear 62, intermediate gear 69 and gear portion 72a described above functions to move the guide rollers 41, 43 and 45 supported on the first to third loading bases 40, 42 and 44 in the direction which the magnetic tape T is pulled out as described below. By the way, the shafts 61,68 and 71 are secured to the chassis base 21 and supply loading gear 62, intermediate gear 69 and take-up loading arm 72 supported by those shafts are positioned underneath of the guide rail plate 46 (Figs. 3 and 4).

Asupply loading arm 63 is also rotatably supported by the shaft 61 above the supply loading gear 62. A pin 62a secured to the supply loading gear 62 idly engages within an elongated slot 63a provided on the supply loading arm 63 and a spring 64 is anchored between the supply loading gear 62 and the supply loading arm 63 for pressurizing the supply side upper regulating guide roller 41 supported on the first loading base 40 after completing tape loading. Due to that, the supply loading arm 63 is urged by the spring 64 clockwise centering on the shaft 61 and is positioned by the pin 62a abutting to an end of the elongated slot 63a. When the supply loading gear 62 turns clockwise centering on the shaft 61, the supply loading arm 63 turns as a unitized body with the supply loading gear 62 by means of the pin 62a.

Further one end of the supply loading arm 63 is linked to one end of a first toggle arm 66 by means of a shaft 65 and the other end of the first toggle arm 66 is linked to the first loading base 40 above the guide rail plate 46 by means of a shaft 67 whose lower end is slidably mounted to the first guide rail 46a along that.

A spring 70 for pressurizing the take-up side upper regulating guide roller 43 and take-up side lower regulating guide roller 45 supported on the second and third loading bases 42 and 44 after completing the tape loading action are provided within the intermediate gear 69.

One end of the take-up loading arm 72 is linked to one end of a take-up toggle arm 74 by means of a shaft 73 and the other end of the take-up toggle arm 74 is linked to one end of a second toggle arm 76 and one end of a third toggle arm 77, respectively, by means of a shaft 75. Further, the other end of the second toggle arm 76 is linked to the second loading base 42 above the guide rail plate 46 by means of a shaft 78 whose lower end is slidably mounted on the second guide rail 46b along that. On the other hand, the other end of the third toggle arm 77 is linked to the third loading base 44 above the guide rail plate 46 by means of a shaft 79 whose lower end is slidably mounted on the third guide rail 46c along that.

Accordingly, when the control cam gear 53 is turned clockwise during the tape loading action described later, the pin 60b secured to the arm gear 60 moves along the cam groove 53b of the control cam gear 53 in the left direction of the drawing. Thereby the arm gear 60 is turned counterclockwise centering on the shaft 59 and the supply loading gear 62, supply loading arm 63, intermediate gear 69 and take-up loading arm 72 on which the gear portion 72a are formed in one body are turned. Those moves are transmitted to the second and third toggle arms 76 and 77 by means of the first toggle arm 66 and take-up toggle arm 74. As a result, the first through third loading bases 40, 42 and 44 move in the direction of the rotary drum 23 along the first through third guide rails 46a, 46b and 46c and the guide rollers 41,43 and 45 pull out the magnetic tape T in the tape cassette 1 (Fig. 2).

As the cassette loading and tape loading actions are completed, the above loading members return to the position shown in Fig. 8.

Similarly, a cam groove is provided on the pinch roller cam gear 56 shown in Fig. 7 to press the pinch roller 34 supported on the pinch roller arm 35 (Figs. 3 and 4) to a capstan 91 with a predetermined timing.

Referring now to Fig. 9, a construction around the rotary drum 23 provided in the inner part of the chassis base 21 which is the main part of the present invention will be explained.

Fig. 9 is a plan view illustrating a slant base assembly section and the capstan seen by removing the rotary drum in the state when the tape loading has been completed as shown in Fig. 8.

The slant base assembly section 80 shown in Fig. 9 is assembled into one unit on the back of the rotary drum 23. That is, on a base 81 (hereinafter referred to as the slant base 81) of the slant base assembly section 80, a supply side slant face 81 b is provided on the left upper stream and a take-up side slant face 81c is provided on the right downstream centering on a drum mounting face 81a. Further, a parallel face 81d is provided on the downstream on the right of the take-up side slant face 81c. These faces 81a through 81d are formed in one body using die-cast or resin material. The drum mounting face 81a, supply side slant face 81 b and take-up side slant face 81c slant at respective predetermined angles in respective directions relative to the upper surface 21 a of the chassis base 21 (Fig. 3). The parallel face 81d is parallel to the upper surface 21a of the chassis base 21.

The rotary drum 23 having a rotary magnetic head (not shown) is provided on the drum mounting face 81a by slanting by a predetermined angle in a predetermined slant direction.

A supply side slant pole 82 is pressed into and fixed to the supply side slant face 81 b at the upper stream of the tape lead-in side of the rotary drum 23 with a predetermined height and by slanting by a predetermined angle in the predetermined slant direction. The supply side slant pole 82 is provided with a function to correct the running direction of the magnetic tape T rolled out of the supply reel 5 (Fig. 2) so that it is helically wrapped around the rotary drum 23.

A supply side tape guide member 83 (hereinafter referred to as the supply side lower regulating guide roller 83) is provided adjustably in its height direction by a mounting screw mechanism and perpendicularly fixedly to the supply side slant face 81 b between the supply side slant pole 82 and the tape lead-in side of the rotary drum 23 on the downstream of the supply side slant pole 82.

The supply side upper regulating guide roller (first tape guide member) 41 supported perpendicularly on the first loading base 40 is inserted while slanting from the high slant face on the end of the first guide rail 46a to a predetermined final position of a first guide rail 81bᵢ of the supply side slant face 81 b which is linked to the guide rail 46a between the supply side lower regulating guide roller 83 and the tape lead-in side of the rotary drum 23 to be able to guide the magnetic tape T to the tape lead-in side of the rotary drum 23 after completing the tape loading action. That is, the supply side upper regulating guide roller 41 is allowed to guide the magnetic tape T directly to the tape lead-in side of the rotary drum 23 on the downstream of the supply side slant pole 82. At this time, the supply side upper regulating guide roller 41 is pressed and positioned by the spring 64 (Figs. 6 through 8) anchored between the supply loading gear 62 and the supply loading arm 63.

On the tape lead-out side of the rotary drum 23, the take-up side upper regulating guide roller (second tape guide member) 43 supported on the second loading base 42 is inserted while slanting from the lower slant face on the end of the second guide rail 46b to a predetermined final position of the second guide rail 81 _{Ci} of the take-up side slant face 81 c which is linked to the guide rail 46b to be able to guide the magnetic tape T rolled out from the rotary drum 23 to the downstream after completing the tape loading action. At this time, the take-up side upper regulating guide roller43 is pressed and positioned by the spring 70 (Figs. 6 through 8) provided within the intermediate gear 69.

Then after completing the tape loading action, since the end of the second guide rail 46b is formed into the lower slant face than the high slant face of the end of the first guide rail 46a, the magnetic tape T can be guided so that it is helically wrapped around the rotary drum 23 along a lead (not shown) thereof without riding on it by the supply side upper regulating guide roller 41 and take-up side upper regulating guide roller 43.

The take-up side lower regulating guide roller (third tape guide member) 45 supported to the third loading base 44 while slanting by a predetermined angle is inserted while slanting from the parallel face of the end of the third guide rail 46c to a predetermined final position of a third guide rail 81dᵢ of the parallel face 81d which is linked to the guide rail 46c by being separated from the tape lead-out of the rotary drum 23 on the downstream of the second guide rail 46b after completing the tape loading action. At this time, the take-up side lower regulating guide roller 45 is pressed and positioned by the spring 70 (Figs. 6 through 8) provided within the intermediate gear 69.

By the way, the slant angle of the take-up side upper regulating guide roller 43 and that of the take-up side lower regulating guide roller 45 are set in parallel in a state when they reach to the tape loading completing positions as shown in the figure.

A take-up side slant pole 84 is pressed into and fixed to the parallel face 81d with a predetermined height slanting by a predetermined angle in the predetermined slant direction. The position for setting the take-up side slant pole 84 is provided on the downstream from the tape lead-out side of the rotary drum and on the downstream of the take-up side lower regulating guide roller 45 which has reached to the tape loading completing position. It is provided with a function to correct the running direction of the magnetic tape T rolled out while slanting from the tape lead-out side of the rotary drum 23 so that it is wound around the capstan and the take-up reel 6 within the tape cassette 1 (Fig. 2) on the downstream. The supply side slant pole 82 and the take-up side slant pole 84 are fixedly installed so that magnetic face side of the magnetic tape T is wrapped around by the tape path shown in Fig. 5.

Accordingly, the magnetic tape T rolled out of the supply reel 5 of the tape cassette 1 (Fig. 2) runs along the upper face 21a of the chassis base 21 in parallel. Then after its running direction is corrected by the supply side slant pole 82 and its running is regulated by the supply side lower regulating guide roller 83 and supply side upper regulating guide roiier 41, its enters the tape lead-in side of the rotary drum 23 mounted on the drum mounting face 81 a. Then the running direction of the magnetic tape T rolled out of the tape lead-out side of the rotary drum 23 while being helically wrapped around the rotary drum 23 is corrected passing through the take-up side upper regulating guide roller 43 and take-up side lower regulating guide roller 45 and by the take-up side slant pole 84 again runs along the upper surface 21a of the chassis base 21 in parallel and is returned to the take-up reel 6 of the tape cassette 1 (Fig. 2) while being threaded through the capstan and pinch roller 34.

As described above, the supply side slant pole 82 and the supply side lower regulating guide roller 83 are fixedly installed on the left and the take-up side slant pole 84 is fixedly installed on the right, centering on the rotary drum 23, on the slant base 81 which is a single part to helically wrap the magnetic tape T around the rotary drum 23 and those members 82 through 84 are assembled into one unit on the slant base 81 and are mounted on the upper surface 21a of the chassis base 21 near the rotary drum 23 after completing the assembly, so that assembly efficiency and precision of the apparatus 20 are improved. Moreover, the supply side upper regulating guide roller 41, take-up side upper regulating guide roller 45 which compose parts of the tape loading members are pressed and positioned on the slant base 81, so that their relative positioning accuracy is increased. Especially by fixedly installing the supply side slant pole 82 and take-up side slant pole 84, the precision of the predetermined slant direction and the predetermined slant angle of the both slant poles 82 and 84 are maintained precisely and the magnetic tape T can be run stably as compared to those in which slant poles are supported on movable loading bases as described with reference to the prior art VHS type.

Accordingly, the other tape running system (guide rollers and others) needs not be made in high precision so much, provided that only the slant base 81 is fabricated in high precision. Thereby it allows to construct the apparatus simply and to bring down the cost.

Further, according to this magnetic tape running system, no slant pole exists between a group of the guide rollers 83, 41 43 and 45 for regulating upper and lower side of the magnetic tape T and the rotary drum 23, so that no deformation of the magnetic tape Twill be developed due to mounting error of the slant poles and the like.

When the magnetic tape T is pulled out of the tape cassette 1 to the rotary drum 23 by a group of the supply side upper regulating guide roller 41, the take-up side upper regulating guide roller 43 and the take-up side lower regulating guide roller 45, a minimum amount of the tape T in the supply side of the rotary drum 23 is pulled out only by the supply side upper regulating guide roller41. By doing this a room is made for accomodating the loading motor 50 (Fig. 6). In the take-up side of the rotary drum 23, the distance between the take-up side upper regulating guide roller 43 and the take-up side lower regulating guide roller 45 is amply provided to keep the take-up reel 6 remote from the rotary drum 23 along the threaded tape T. By doing this, an adverse effect due to unevenly wound tape T on the take-up reel 6, is minimized. This is particularly true when the tape T is running reversely toward the rotary drum 23 from the take-up reel 6 in the reverse-play mode. In other words, tape running fluctuations if any are absorbed in this guide rollers arrangement, and do not reach to the rotary drum 23.

For this reason, and as shown in Fig. 7, there is no space for installing the loading motor 50 in the take-up side area since the capstan 91 has been installed in the area.

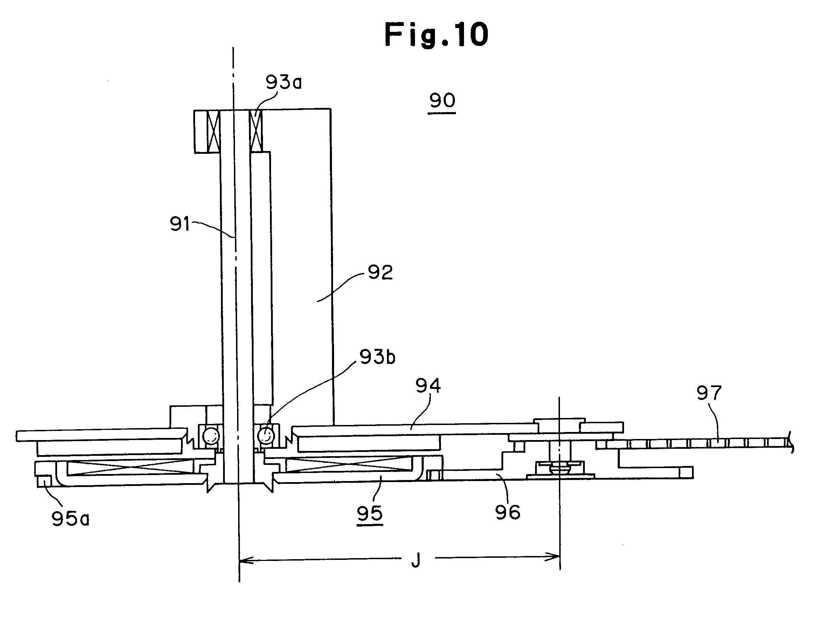

Referring now to Figs. 8 through 10, a magnetic tape driving method will be explained. Fig. 10 is a section view illustrating a capstan assembly.

The capstan 91 shown in Fig. 8 is driven directly by the capstan assembly 90 (hereinafter referred to as the capstan motor 90) assembled into one body as shown in Fig. 10. The magnetic tape T is run by pressing the pinch roller 34 (Figs. 3 and 4) to the capstan 91.

In the capstan motor90 shown in Fig. 10, the capstan 91 is rotatably supported by bearings 93a and 93b housed in a capstan housing 92. A coil substrate 94 is fixed to the capstan housing 92. A rotor 95 is pressed into the lower end portion of the capstan 91 to rotate as one unitized body. A gear portion 95a is provided on the periphery portion of the rotor 95 to transmit torque to a transmission gear 96 by engaging therewith. The torque is transmitted from the transmission gear 96 to a center gear 98 shown in Fig. 8 by means of a belt 97 to rotate and drive the supply reel disc 25 and take-up reel disc 26 (Figs. 3 and 4). Here, since the gear portion 95a provided on the periphery of the rotor 95 of the capstan motor 90 and the transmission gear 96 perform a relatively high speed interlocking transmission, poor interlocking may occur and noise be generated if the precision of the inter-axial distance J between the rotational center shaft of the rotor 95 and that of the transmission gear 96 is not precise. This noise not only degrades the quietness of the apparatus 20 but also generates vibration, causing in effects on performance as jitters, wow and flutter. In the present embodiment, however, the rotational shaft 96a of the transmission gear 96 fixed to the coil substrate 94 and the rotational shaft (capstan) of the rotor 95 is also fixed to the coil substrate 94 by means of the capstan housing 92, so that the dimension of the inter-axial distance J can be readily made precise, causing no such problems as described above.

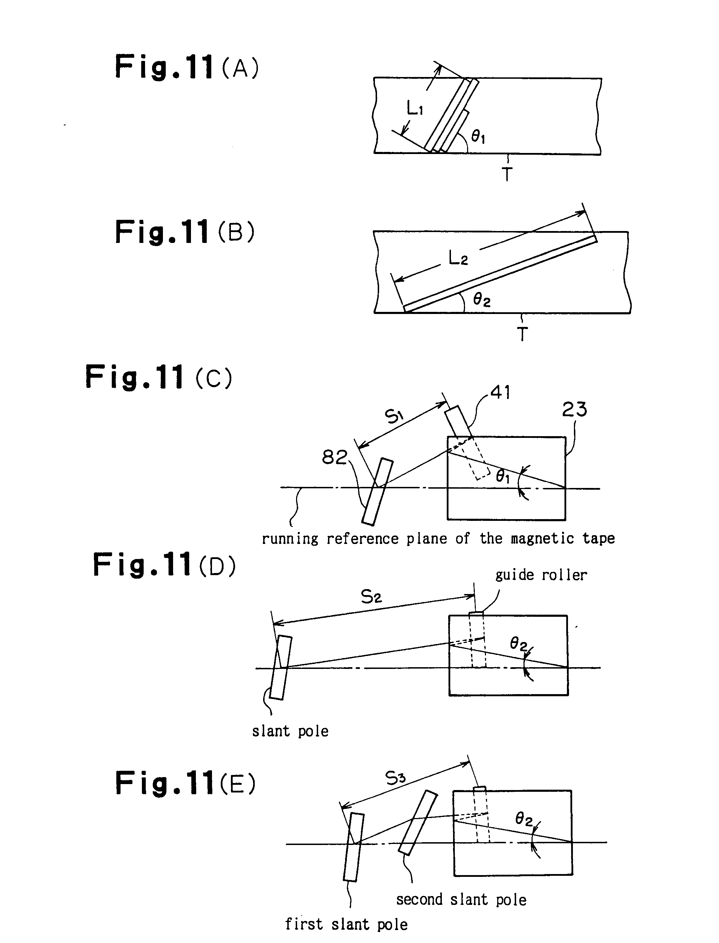

Referring now to Figs. 11(A) through 11(E), the lead angle of the rotary drum 23 described above will be further explained. Figs. 11(A) through 11(E) are drawings for explaining track angles of magnetic tape and lead angles of the rotary drum, wherein Fig. 11(A) shows a track angle of the preferred embodiment, Fig. 11 (B) a track angle of a prior art, Fig. 11 (C) a track angle of the preferred embodiment, Figs. 11(D) and (E) lead angles of the prior art.

The track angle is an angle 0 of a recorded track on the magnetic tape T (which is viewed as extended tape T to flat) by the magnetic head (not shown) which rotates in unitarily with the rotary drum 23 and the lead angle is a slant angle when the magnetic tape T is helically wrapped around the rotary drum 23. (a periphery of which is viewed as extended to flat) Both angles will be explained below assuming that they are the same angle in outline.

In the magnetic recording/playback apparatus 20 of the present invention, the angle of the lead forguid- ing the magnetic tape T provided on the rotary drum 23 is set larger than the prior art for a running path of the magnetic tape T.

That is, lead angle of as prior art VTR is generally set less than 6 degrees, because track length L₂ becomes longer and track angle O2 becomes smaller since one filed of video signal has to be recorded on single track within a predetermined width of the magnetic tape T as shown in Fig. 11 (B). Accordingly in the prior art shown in Fig. 11(D), if lead angle O2 (track angle (₂) is small, distance S2 for the magnetic tape T helically wrapped around the rotary drum 23 to return to the running reference plane of the magnetic tape T within the tape cassette 1 becomes greater, increasing the size of the apparatus 20.

Then such a measure as to insert a second slant pole very closely to the rotary drum 23 is generally taken in the prior art as shown in Fig. 11 (E) to reduce distance S₃ for the magnetic tape T to return to the running reference plane as a method for increasing the lead angle, though running load of the magnetic tape T becomes greater due to the second slant pole.

According to the preferred embodiment of the present invention, track length L₁ per single track becomes shorter by splitting and recording single field of video signal into a plurality of tracks (2.5 tracks) and as a result, track angle 0₁ can be set more than 7 degrees. The track angle 0₁ is set so large as about 10 degrees in the present embodiment. Accordingly, if the lead angle 0₁ (track angle (₁) is large, the distance S₁ for the magnetic tape T helically wrapped around the rotary drum 23 to return to the running reference plane thereof within the tape cassette 1 becomes shorter and part of the rotary drum 23 is allowed to be mouthed partly into the tape cassette 1 as shown in Fig. 11(C), thereby contributing in downsizing the apparatus 20. Further, since the second slant pole shown in Fig. 11(E) needs not be provided, running load of the magnetic tape T is reduced.

### [Operation of Magnetic Recording/Playback Apparatus]

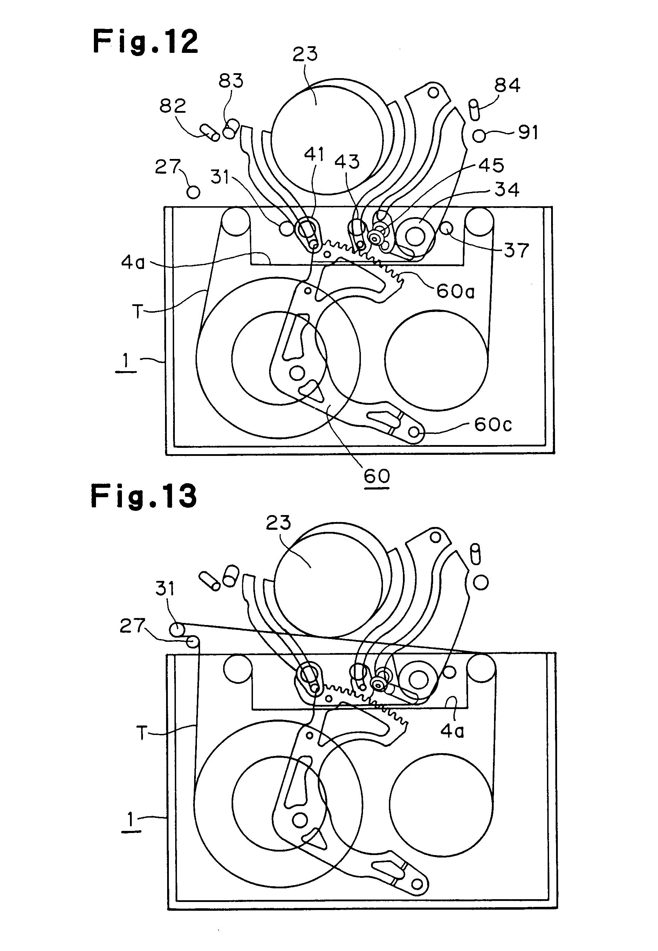

Referring now to Figs. 3 through 6 and Figs. 12 through 17, the operation for concurrently carrying out the cassette loading and tape loading actions by single arm gear 60 which cooperates with the control cam gear 53 in the magnetic recording/playback apparatus 20 constructed as described above will be briefly explained. Figs. 12 through 17 are drawings for explaining steps of the cassette loading and tape loading actions in order.

Step 1: Fig. 12 shows the apparatus 20 in the initial state before cassette loading of the tape cassette 1 mounted and tape loading of the magnetic tape T are carried out. This is the same state with the initial states shown in Figs. 3, 4 and 6.
Step 2: When the loading motor 50 which is the driving source shown in Fig. 6 is activated from the initial state above, the control cam gear 53 starts to turn clockwise and the cassette loading and tape loading actions are started. That is, as shown in Fig. 13, the tension roller 31 is pulled out of the first opening 4a of the tape cassette 1 to form a magnetic tape path as seen in the figure.
Step 3: The tape cassette 1 mounted on the slide deck 22 starts to move slightly in the direction of the rotary drum 23 (direction of arrow A₁) and cooperating with it, the upper half member 37 is pulled out of the first opening 4a.

Due to the action of the upper half 37 above, the arm gear 60 is turned counterclockwise centering on the shaft 59 by the pin 60b of the arm gear which slides in the cam groove 53b of the control cam gear 53 and the slide deck 22 is moved in the direction of the rotary drum 23 by the pin 60c and by means of the lever24 which is engaged with the pin 60c, so that the upper half member 37 supported by the slide deck 22 pulls the magnetic tape T of the tape cassette 1.

Further, the take-up side upper regulating guide roller 43 supported on the second loading base 42 moves out of the first opening 4a preceding to the take-up side lower regulating guide roller 45 supported by the third loading base 44 moving out of the first opening 4a, slightly after, the take-up side upper regulating guide roller 41 supported by the first loading base 40 is moves out of the first opening 4a following the take-up side lower regulating guide roller 45, to form the magnetic tape path as seen in the figure.

Due to the actions of the guide rollers 41, 43 and 45. the supply loading gear 62 engaged with the sector gear portion 60a of the arm gear 60 is turned by the counterclockwise turn of the arm gear 60 and the take-up loading arm 72 which is formed unitarily with the gear portion 72a is turned via the intermediate gear69. Then the first loading base 40 linked with the supply loading gear62 and the second and third loading bases 42 and 44 linked with the take-up loading arm 72 are activated in the order of timings described above.

The difference in the timings of the first through third bases 40, 42 and 44 is caused because the second loading base 42 is located at a position preceding to the third loading base 44 within the first opening 4a and the first loading base 40 is delayed until the pin 62a secured to the supply loading gear 62 moves toward the left within the elongated slot63a provided on the supply loading arm 63.

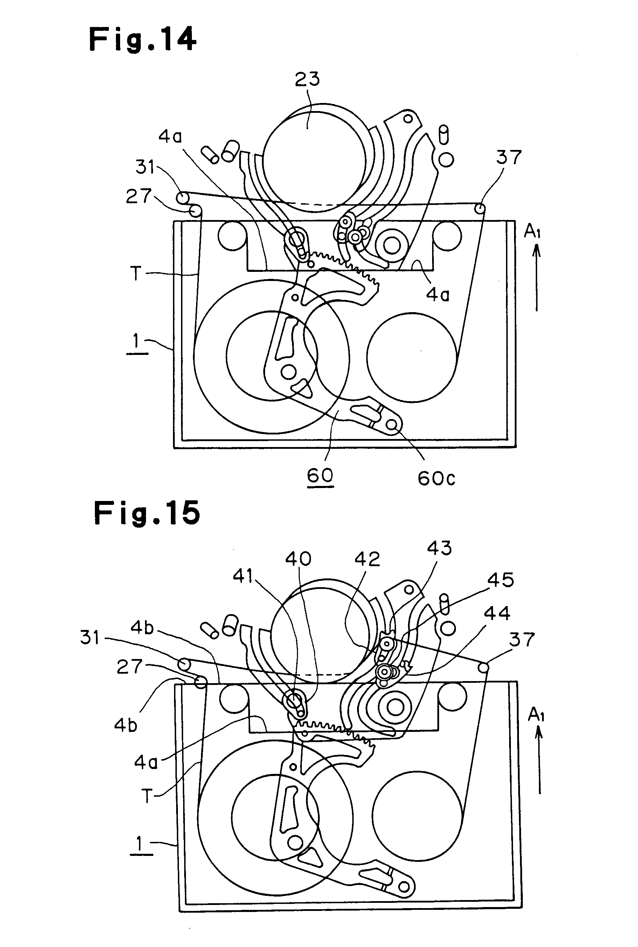

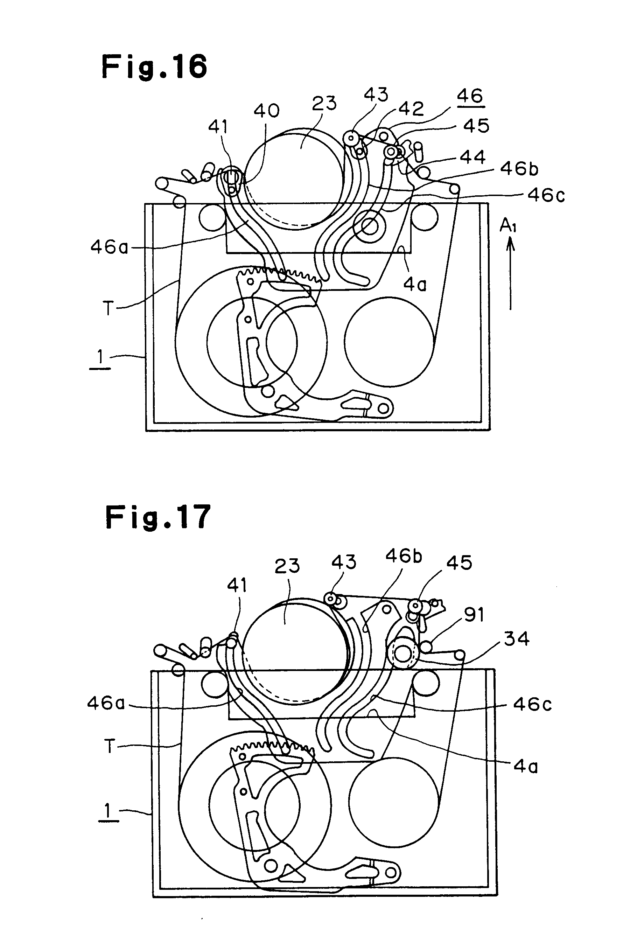

Step 4: When the tape cassette 1 moves further in the direction of the rotary drum 23, the entrance roller 27 enters to the second opening 4b of the tape cassette 1 as shown in Fig. 15. During the action of the entrance roller 27 above, the protrusion 28a of the entrance lever 28 moves from the elevated face 30a of the trapezoidal bracket 30 along the slant face 30b due to the move of the slide deck 22 in the direction or arrow A_{1'} so that the entrance lever 28 turns clockwise centering on the shaft 29 and the entrance roller 27 enters to the second opening 4b.
Step 5: As shown in Fig. 16, the tape cassette 1 is moved further in the direction of the rotary drum 23 and the part of the rotary drum 23 is mounted partly into the first opening 4a of the tape cassette 1. The first through third loading base 40, 42 and 44 for supporting the supply side upper regulating guide roller 41, the take-up side upper regulating guide roller 43 and the take-up side lower regulating guide roller 45 slide along the first through third guide rail 46a through 46c of the guide rail plate 46. At this time, the preced- ingly moving take-up side upper regulating guide roller 43 wraps the magnetic tape T around the lead (not shown) of the rotary drum 23 while dropping along the second guide rail 46b and the supply side upper regulating guide roller41 wraps the magnetic tape T around the lead of the rotary drum 23 while elevating along the first guide rail 46a behind the take-up side upper regulating guide roller 43. Accordingly, the magnetic tape T is wrapped around the rotary drum 23 stably and deformation developed if any on the magnetic tape T is reduced by shifting the timing of the winding by the drop of the preceding take-up side upper regulating guide roller 43 and that by the elevation of the supply side upper regulating guide roller 41 following the take-up side upper regulating guide roller 43.
Step 6: The supply side upper regulating guide roller 41, the take-up side upper regulating guide roller 43 and the take-up side lower regulating guide roller 45 further enter to and are positioned at the predetermined final position of the slant base 81 (Figs. 8. 9) provided close to the rotary drum 23 from the first through third guide rails 46a through 46c and wrap the magnetic tape T helically around the rotary drum 23 in a predetermined angular range as shown in Fig. 17. At this time, since a moving distance of the take-up side lower regulating guide roller 45 is provided to be substantially long, the take-up side lower regulating guide roller 45 is positioned at the final position after when the magnetic tape T is helically and securely wrapped around the rotary drum 23 by the supply side upper regulating guide roller 41 and the take-up side upper regulating guide roller43. Those actions of guide rollers 41,43 and 45 allow to increase the amount of magnetic tape T pulled out in the take-up side rather than the supply side as described before.

Then the move of the tape cassette 1 is halted. After that, the pinch roller 34 supported on the slide deck 22 is pulled out of the first opening 4a to be pressed to the capstan 91 causing the magnetic tape T to run and the configuration returns to the same state with that shown in Fig. 5. The action for pulling the pinch roller 34 out of the first opening 4a is carried out by the pinch roller cam gear 56.

As described above, since the magnetic recording/playback apparatus 20 of the present invention is constructed so that cassette loading and tape loading actions are concurrently carried out by the single arm gear 60 which cooperates with the control cam gear 53 linked to the driving source, operation time of the cassette loading and tape loading actions can be reduced. Further, since the both actions are activated without varying the timing, quality and reliability of the apparatus 20 is improved. Still more, since the cassette loading and tape loading members are arranged effectively within the space of the apparatus 20 and the number of the both loading members are reduced, the cost of the apparatus is brought down.

In the magnetic recording/playback apparatus of the present invention described above, according to Claim 1, the supply side slant pole and take-up side slant poles are stationary installed respectively in the lead-in and lead-out sides of the rotary drum. As a result, the accuracy of the predetermined slant direction and slant angle of both the slant poles are maintained in high precision and a magnetic tape runs stably as compared to ones in which slant poles are supported on the movable loading bases such as those explained of the prior art VHS type. Further, there exists no slant pole such as those explained in the prior art example immediately before the lead-in side and immediately after the lead-out side of the rotary drum, so that no deformation of magnetic tape caused by mounting torelance of the slant poles and the like develops and the magnetic tape is helically wrapped around the rotary drum stably by the tape guide members supported on the loading bases.

Further according to the present invention, the supply side tape guide members for regulating running of the magnetic tape and the first tape guide member for pulling out the magnetic tape are provided between the supply side slant pole and the lead-in side of the rotary drum and the second and third tape guide members for pulling out the magnetic tape, are provided between the lead-out side of the rotary drum and the take-up side slant pole, so that the effect explained above is held and the amount of magnetic tape pulled out is increased in the lead-out side (take-up side) of the rotary drum by the second and third tape guide members, allowing to absorb unstable running of the tape on the take-up side particularly when for example, it runs reversely.

According to the present invention, the supply side slant pole, the supply side tape guide member and the take-up side slant are installed on one fixed member as a unitized body, so that the effects above are held and the efficiency of assembling works and assembly accuracy of the apparatus is improved. Further, since the first through third tape guide members are positioned at predetermined positions of the fixed member, other running system (guide roller and others) needs not be made in high precision so much, provided that only the base (slant base) is fabricated in high precision, thereby allowing to construct a simplified apparatus and to bring the cost down.

Further according to the present invention, timings of the first through third tape guide members for pulling out the magnetic tape are controlled so that especially when the tape is wrapped around the rotary drum, the second tape guide member on the lead-out side of the rotary drum, so that the magnetic tape is wrapped around the rotary drum stably and deformation caused on the tape is reduced into a half.

## Claims

1. Magnetic recording/playback apparatus having a rotary head drum mounted on base means for recording/playback signals on and from a magnetic tape housed in a tape cassette to be loaded into said apparatus, said magnetic tape being wound on a supply reel and a take-up reel housed in a cassette case of said tape cassette and being threaded along a front of said cassette case, said cassette case being provided with an opening along said front of said cassette case and between said supply and take-up reels for accepting therein at least loading means of said apparatus, said loading means moving out of said cassette case from said opening, said loading means having movable loading base means(40, 42, 44) and drawing said magnetic tape out of said cassette case and threading said magnetic tape along a tape path extending from said supply reel to said take-up reel including a helical lead of said rotary head drum, said recording/playback apparatus comprising:
a first slant pole(82) mounted on said base means at a supply side of said rotary head drum, said first slant pole having a first predetermined height and a first predetermined angle in a first predetermined direction with respect to said rotary head drum, for directing said magnetic tape toward said rotary head drum along said tape path ;
a plurality of loading members being included in said loading means and supported on said movable loading base means, said plurality of loading members being provided in a downstream with respect to said first slant pole in said tape path, said movable loading base means moving along guide means(46a, 46b, 46c) provided on said base means and extended from a vicinity of said opening of said cassette case which is loaded to the apparatus, to a vicinity of said rotary head drum, so that said plurality of loading members draws said magnetic tape out of said cassette case and threads along said tape path including said helical lead of said rotary head drum; and
a second slant pole(84) mounted on said base means at a take-up side of said rotary head drum and in a downstream with respect to said plurality of loading members which are moved close to said rotary head drum, said second slant pole having a second predetermined height and a second predetermined angle in a second predetermined direction with respect to said rotary head drum, for directing said magnetic tape along said tape path toward said take-up reel.

2. Magnetic recording/playback apparatus claimed in claim 1 wherein said movable loading base means comprises first(40), second(42) and third(44) movable loading bases, and said guide means comprises first(46a), second(46b) and third(46c) guide rails, said first movable loading base moves along said first guide rail extending to a tape lead-in side of said rotary head drum, said second movable loading base moves along said second guide rail extending to a tape lead-out side of said rotary head drum, said third movable loading base moves along said third guide rail, said magnetic recording/playback apparatus further comprises:
a first guide member(83) mounted on said base means between said first slant pole and said helical lead of said rotary head drum for restricting running of said magnetic tape in said tape path;
second guide member(41) mounted on said first movable loading base;
a third guide member(43) mounted on said second movable loading bases; and
a fourth guide member(45) mounted on said third movable loading bases; and
said second, third and fourth guide members draw said magnetic tape out of said cassette case, and said second and third guide members thread said magnetic tape along said helical lead of said rotary head drum.

3. Magnetic recording/playback apparatus claimed in claim 2 wherein said base means comprises a base member and all of said first slant pole, said first guide member and said second slant pole are mounted on said base member as a unitized component and disposed in a vicinity of said rotary heads drum, and said base member stops and positions accurately said second through fourth guide members for relative positions there between when said first through third movable loading bases move along said first through third guide rails respectively and reach respective ends of travel.

4. Magnetic recording/playback apparatus claimed in claim 3 wherein said third guide member moves ahead of said second guide member, and said fourth guide member is stopped and positioned after said third and second guide members are stopped and positioned.
